# EUROPÄISCHE PATENTANMELDUNG

(11) **EP 1 880 589 A1**
(43) Veröffentlichungstag der Anmeldung: **23.01.2008**
(21) Anmeldenummer: 07013170.1
(22) Anmeldetag: 05.07.2007
(51) Int. Cl.: A01B 21/08, A01B 61/04

(54) **Aufhängungsvorrichtung einer Landmaschine**

(30) Priorität: 18.07.2006 DE 102006033118; 23.03.2007 DE 102007013939
(71) Anmelder: Amazonen-Werke H. Dreyer GmbH & Co. KG, 49205 Hasbergen-Gaste (DE)
(72) Erfinder: Goretzko, Robert, 28201 Bremen (DE); Steen, Rüdiger, 27798 Hude (DE)

(57) **Zusammenfassung**

Aufhängungsvorrichtung einer Landmaschine zur Aufhängung eines Maschinenteils, insbesondere eines Bodenbearbeitungswerkzeuges, mit zumindest einem das Maschinenteil tragenden Schwenkarm sowie einem sich vorzugsweise quer zur Arbeitsrichtung erstreckenden Schwenkarmträger, an dem der Schwenkarm mit einem Lagerkörper schwenkbar gelagert ist, wobei der Lagerkörper den Schwenkarmträger umgreift und zwischen dem Lagerkörper und den davon umgriffenen Abschnitt des Schwenkarmträgers zumindest ein elastisches Lagerelement vorgesehen ist, das sich mit seiner Längsachse im wesentlichen parallel zu der Schwenkachse des Schwenkarmes und der Längsachse der Schwenkarmträger erstreckt und durch Schwenkbewegungen des Schwenkarmes eine zumindest teilweise Verformung erfährt.

Um eine verbesserte Montagemöglichkeit der Aufhängevorrichtung insbesondere im Zusammenhang mit den elastischen Lagerelementen zu schaffen, ist vorgesehen, dass das elastische Lagerelement mit einem reib- und / oder formschlüssigen Verbindungselement mit dem Lagerkörper verbindbar ist, dass an den beiden gegenüberliegenden Enden des elastischen Lagerelementes ein Verbindungselement angeordnet ist, dass die beiden Verbindungselemente mit den äußeren, gegenüberliegenden Enden des Lagerkörpers zusammenwirken.

## Beschreibung

Die Erfindung betrifft eine Aufhängungsvorrichtung einer Landmaschine gemäß des Oberbegriffes des Patentanspruches 1.

Eine derartige Aufhängungsvorrichtung ist beispielsweise durch die DE 103 43 466 A1 und DE 2004 007 112 U1 bekannt geworden. Die elastischen Lagerelemente, die zwischen dem Schwenkarmträger und dem diesen umgreifenden Lagerkörper angeordnet sind, werden vor der Montage mit dem Lagerkörper an dem Schwenkarmträger an diesen oder mit Lagerkörper mittels Klebemitteln angeheftet.
Nachteilig ist bei der bekannten Aufhängungsvorrichtung die aufwendige Montage insbesondere der elastischen Lagerelemente. Diese werden vielfach in mühseliger Arbeit mittels doppelseitiger Klebestreifen an den Lagerkörper oder den Schwenkarmträger fixiert. Aufgrund des relativ rauen Montagebetriebs fallen diese Lagerelemente dann jedoch vor der Befestigung der Aufhängevorrichtung mit den Lagerkörpern an den den Schwenkarmträger des öfteren wieder ab.

Der Erfindung liegt die Aufgabe zugrunde, eine verbesserte Montagemöglichkeit der Aufhängevorrichtung insbesondere im Zusammenhang mit den elastischen Lagerelementen zu schaffen.

Diese Aufgabe wird erfindungsgemäß durch die kennzeichnenden Merkmale des Anspruches 1 gelöst. Infolge dieser Maßnahme kann zur Montage das Lagerelement in einfacher Weise an dem Lagerkörper der Aufhängevorrichtung, in dem das elastische Lagerelement über das Verbindungselement mit dem Lagerkörper verbunden wird, befestigt werden. Dies ist insbesondere dadurch möglich, dass das elastische Lagerelement ein mit dem Lagerkörper reib- und/oder formschlüssig verbindbares Verbindungselement aufweist. Damit das elastische Lagerelement in einfacher Weise sicher an dem Lagerkörper angeordnet werden kann, sind an den beiden gegenüberliegenden Enden des elastischen Lagerelementes jeweils ein Verbindungselement angeordnet und die Verbindungselemente wirken mit den äußeren, gegenüberliegenden Enden des Lagerkörpers zusammen.

Eine besonders sichere Befestigung des elastischen Lagerelementes an dem Lagerkörper zur Montagezwecke wird dadurch erreicht, dass das Verbindungselement hakenförmig oder clipsartig ausgebildet ist.

Ein einfache Anordnung der Verbindungselemente an dem Lagerelement lässt sich dadurch erreichen, dass das Verbindungselement mit dem elastischen Lagerelement einstückig verbunden ist.

Eine besonders einfache Montage des elastischen Lagerelementes an dem Lagerkörper wird dadurch erreicht, dass das Verbindungselement auf der dem Lagerkörper zugewandten Seite eine nach außen verlaufende Schräge aufweist. Hierdurch drücken sich zunächst die haken- oder clipsartigen Verbindungselemente beim Aufschieben auf den Lagerkörper nach außen und rasten dann, wenn das elastische Lagerelement seine vorgesehene Lage am Lagerkörper erreicht hat, ein.

Weiterhin wird Elementenschutz für ein Lagerelement gemäß den Ansprüchen 7 bis 12 beansprucht

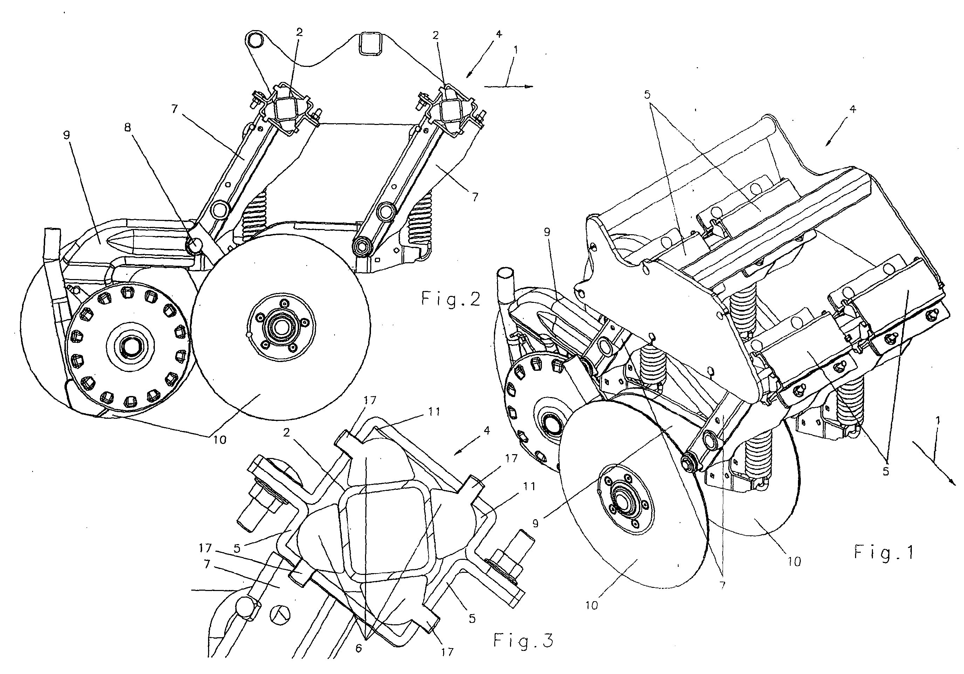

Weitere Einzelheiten der Erfindung sind der Beispielsbeschreibung und den Zeichnungen zu entnehmen. Hierbei zeigen
- Fig. 1: die Anordnung der Schwenkarmträger mit den Schwenkarmen und den Lagerkörpern einer Säeinheit einer als Sämaschine ausgebildeten Landmaschine in perspektivischer Darstellung,
- Fig. 2: die Anordnung der Aufhängungsvorrichtung der Säeinheit in Seitenansicht,

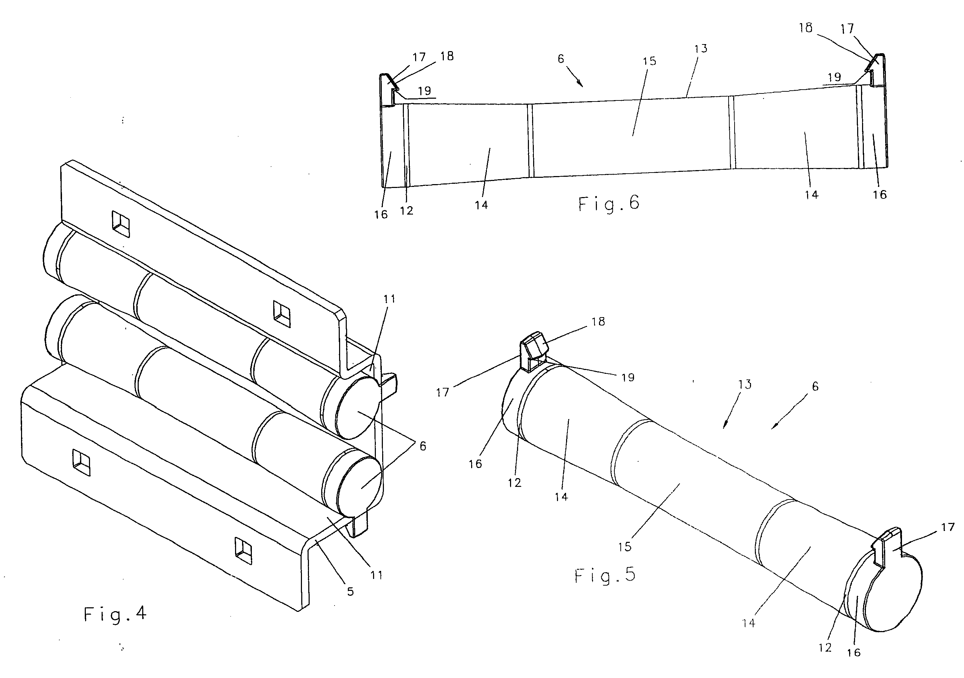

- Fig. 3: die Lagerung der Schwenkarme mit Lagerelementen an dem Schwenkarmträger der Anhängungsvorrichtung in Seitenansicht und vergrößertem Maßstab,
- Fig. 4: die an dem Lagerkörper der Aufhängungsvorrichtung angeordneten elastischen Lagerelemente,
- Fig. 5: ein elastisches Lagerelement in perspektivischer Darstellung und
- Fig. 6: ein elastisches Lagerelement in Vorderansicht und vergrößerten Maßstab,
- Fig. 7: die an einen Schwenkarmträger mittels der Aufhängungsvorrichtungen angeordneten als Scheiben ausgebildeten Bodenbearbeitungswerkzeuge einer Scheibenegge in perspektivischer Darstellung und
- Fig. 8: die Aufhängungsvorrichtung für die Bodenbearbeitungswerkzeuge, an einem Schwenkarmträger angeordnet in Seitenansicht und vergrößertem Maßstab.

An einem nicht dargestellten Rahmen einer Landmaschine, die als Sämaschine ausgebildet ist, sind die quer zur Fahrtrichtung 1 verlaufenden Schwenkarmträger 2 einer Säeinheit 3 beabstandet zueinander angeordnet. An dem Rahmen der Sämaschine sind mehrere Säeinheiten 3 nebeneinander, entsprechend der jeweils vorgesehenen Arbeitsbreite der Sämaschine, angeordnet. Mittels einer Aufhängungsvorrichtung 4 sind an den Schwenkarmträgern 2 jeweils über den Lagerkörper 5, den elastischen Lagerelementen 6 die Schwenkarme 7, welche an den dem Lagerkörper 5 abgewandten Ende 8 mittels eines Zwischenarmes 9 und eines Drehlagers jeweils eine drehbar und schräg zur Fahrtrichtung 1 angestellte als Scharscheibe ausgebildete Bodenbearbeitungsscheibe 10 aufweisen, angeordnet. Der Schwenkarm 7 ist über den Lagerkörper 5 und den elastischen Lagerelementen 6 um eine in Längsrichtung des Schwenkarmträgers 2 verlaufende Schwenkachse schwenkbar. Die Schwenkbewegung des Schwenkarmes 7 wird durch eine elastische Verformung der elastischen Lagerelemente 6, deren Längsachse ebenfalls in Längsrichtung des Schwenkarmträgers 2 verlaufen, ermöglicht. Außerdem kann der Schwenkarm 7 mit dem Bodenbearbeitungselement 10 im begrenzten Umfang durch ebenfalls elastische Verformung der elastischen Lagerelemente 6 seitlich ausweichen. Die Lagerkörper 5, welchen den Schwenkarmträger 2 umgreifen, weisen einen vierkantförmigen Querschnitt auf. Ebenfalls weist der Schwenkarmträger 2 einen vierkantförmigen Querschnitt auf, wobei der Lagerkörper 5 gegenüber dem Profil des Schwenkarmträgers 2 in der Ausgangsstellung um 45° verdreht ist, so dass sich der Zwischenraum zwischen dem Lagerkörper 4 und dem davon umgriffenen Schwenkarmträger 2 in vier Lagerelementekammern 11 untergliedert. In diesen vier Lagerelementekammern 11 ist jeweils ein elastisches Lagerelement 6 angeordnet. Das elastische Lagerelement 6 ist gegenüber den beiden seitlichen Endbereichen 12 im mittleren Bereich 13 eingeschnürt ausgebildet, wie die Fig. 4 und 5 zeigen. Somit weist das elastische Lagerelement 6 im mittleren Bereich 13 einen kleineren Durchmesser als im äußeren Bereich auf. Das elastische Lagerelement 6 besteht aus zwei aufeinander zulaufenden kegelstumpfförmigen Bereichen 14, wobei sich zwischen diesen beiden kegelstumpfförmigen Bereichen 14 ein zylinderförmiger Bereich 15 befindet, der in etwa einen Durchmesser aufweist, der den kleinsten Durchmesser des kegelstumpfförmigen Bereiches 14 entspricht. An den Endbereichen der kegelstumpfförmigen Bereiche 14 des elastischen Lagerelementes 6 schließen sich außen zylinderförmige Enden 16 des Lagerelementes 6 an, welche in etwa den Durchmesser des größten Bereiches des zylinderstumpfförmigen Bereiches 14 des Lagerelementes 6 aufweisen.

Zur Vereinfachung der Montage sind an den Endbereichen 16 gegenüberliegend an dem elastischen Lagerelement 6 jeweils ein Verbindungselement 17 angeordnet. Das jeweilige Verbindungselement 17 ist hakenförmig oder clipsartig ausgebildet. Somit sind jeweils an den beiden gegenüberliegenden Enden 16 des elastischen Lagerelementes 6 die beiden Verbindungselemente 17 angeordnet. Die Verbindungselemente 17 sind mit dem elastischen Lagerelement 6 einstückig verbunden. Jedes Verbindungselement 17 weist auf der dem Lagerkörper 5 zugewandten Seite eine nach außen verlaufende Schräge 18 auf. Mittels der Verbindungselemente 17 sind die elastischen Lagerelemente 6 mit den äußeren, gegenüberliegenden Enden des Lagerkörpers 5 verbindbar bzw. an ihn anclipsbar. Zur Erleichterung des Aufclipsens an dem Lagerkörper 5 dient die nach außen verlaufende Schräge 18 der Verbindungselemente 17. Hierdurch wird eine erhebliche Montageerleichterung erreicht, da die Verbindungselemente 17 formschlüssig mittels des clipsartigen Hakens 19 an den äußeren, gegenüberliegenden Enden des Lagerkörpers 5 vor der Montage des Lagerkörpers 5 mit den elastischen Lagerelementen 6 an den Schwenkarmträger 2 befestigt werden können.

Anstelle einer beschriebenen formschlüssigen Verbindung ist es auch möglich, die Verbindungselemente 17 so auszugestalten, dass sie über Reibschluss das elastische Lagerelement 6 am Lagerkörper 5 halten.

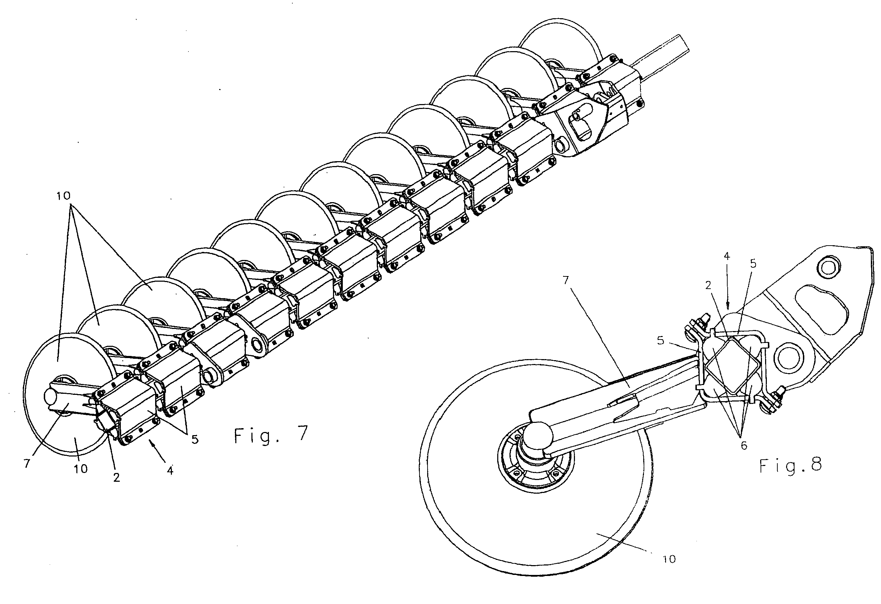

Die Aufhängungsvorrichtung 4 mit den Schwenkarmträgern 2 und den Lagerkörpern 5, sowie den elastischen Lagerelementen 6 und den Schwenkarmen 7 kann auch bei einer gemäß den Fig. 7 und 8 dargestellten Kurzscheibenegge, an der nur der eine als Scharbalken ausgebildeten Schwenkarmträger 2 der Kurzscheibenegge in Fig. 7 und 8 dargestellt sind, angewendet werden. An dem Schwenkarmträger, der an einem nicht dargestellten Rahmen mittels geeigneter Halterung angeordnet ist, sind mittels der Aufhängungsvorrichtung 4 die Schwenkarme 7 über den Lagerkörper 5 und die elastischen Lagerelemente 6 um eine in Längsrichtung des Schwenkarmträgers 2 verlaufende Schwenkachse schwenkbar angeordnet. An dem den Lagerkörpern 5 abgewandten Ende 8 der Schwenkarme 7 sind mittels Drehlager jeweils eine drehbar angeordnete Bodenbearbeitungsscheibe 10 angeordnet. Die elastischen Lagerelemente 6 weisen ebenfalls die vorbeschriebenen Verbindungselemente 17 auf, mittels welchen die elastischen Lagerelemente 6 an dem Lagerkörper 5 zu befestigen sind.

## Patentansprüche

1. Aufhängungsvorrichtung einer Landmaschine zur Aufhängung eines Maschinenteils, insbesondere eines Bodenbearbeitungswerkzeuges, mit zumindest einem das Maschinenteil tragenden Schwenkarm sowie einem sich vorzugsweise quer zur Arbeitsrichtung erstreckenden Schwenkarmträger, an dem der Schwenkarm mit einem Lagerkörper schwenkbar gelagert ist, wobei der Lagerkörper den Schwenkarmträger umgreift und zwischen dem Lagerkörper und den davon umgriffenen Abschnitt des Schwenkarmträgers zumindest ein elastisches Lagerelement vorgesehen ist, das sich mit seiner Längsachse im wesentlichen parallel zu der Schwenkachse des Schwenkarmes und der Längsachse der Schwenkarmträger erstreckt und durch Schwenkbewegungen des Schwenkarmes eine zumindest teilweise Verformung erfährt, **dadurch gekennzeichnet, dass** das elastische Lagerelement (5) mit zumindest einem reib- und / oder formschlüssigen Verbindungselement (17) mit dem Lagerkörper (4) verbindbar ist, dass an den beiden gegenüberliegenden Enden des elastischen Lagerelementes (5) ein Verbindungselement (17) angeordnet ist, dass die beiden Verbindungselemente (17) mit den äußeren, gegenüberliegenden Enden des Lagerkörpers (4) zusammenwirken.

2. Aufhängungsvorrichtung nach Anspruch 1, **dadurch gekennzeichnet, dass** das elastischer Lagerelement (5) ein mit dem Lagerkörper (4) reib- und/oder formschlüssig verbindbares Verbindungselement (17) aufweist.

3. Aufhängungsvorrichtung nach einem oder mehreren der vorstehenden Ansprüchen, **dadurch gekennzeichnet, dass** das Verbindungselement (17) hakenförmig ausgebildet ist.

4. Aufhängungsvorrichtung nach einem oder mehreren der vorstehenden Ansprüchen, **dadurch gekennzeichnet, dass** das Verbindungselement (17) clipsartig ausgebildet ist.

5. Aufhängungsvorrichtung nach einem oder mehreren der vorstehenden Ansprüchen, **dadurch gekennzeichnet, dass** das Verbindungselement (17) mit dem elastischen Lagerelement (5) einstückig verbunden ist.

6. Verbindungselement nach einem oder mehreren der vorstehenden Ansprüche, **dadurch gekennzeichnet, dass** das Verbindungselement (17) auf der dem Lagerkörper (4) zugewandten Seite eine nach außen verlaufende Schräge (18) aufweist.

7. Elastisches Lagerelement zur Anordnung in einer Aufhängungsvorrichtung nach einem oder mehreren der vorstehenden Ansprüche 1-6 **dadurch gekennzeichnet, dass** das elastische Lagerelement (5) mit zumindest einem reib- und / oder formschlüssigen Verbindungselement (17) mit dem Lagerkörper (4) verbindbar ist, dass an den beiden gegenüberliegenden Enden des elastischen Lagerelementes (5) ein Verbindungselement (17) angeordnet ist, dass die beiden Verbindungselemente (17) mit den äußeren, gegenüberliegenden Enden des Lagerkörpers (4) zusammenwirken.

8. Lagerelement nach Anspruch 7, **dadurch gekennzeichnet, dass** das elastischer Lagerelement (5) ein mit dem Lagerkörper (4) reib- und/oder formschlüssig verbindbares Verbindungselement (17) aufweist.

9. Lagerelement nach einem oder mehreren der Ansprüche 7 und/oder 8, **dadurch gekennzeichnet, dass** das Verbindungselement (17) hakenförmig ausgebildet ist.

10. Lagerelement nach einem oder mehreren der Ansprüche 7 bis 9 **dadurch gekennzeichnet, dass** das Verbindungselement (17) clipsartig ausgebildet ist.

11. Lagerelement nach einem oder mehreren der Ansprüche 7 bis 10 **dadurch gekennzeichnet, dass** das Verbindungselement (17) mit dem elastischen Lagerelement (5) einstückig verbunden ist.

12. Lagerelement nach einem oder mehreren der Ansprüche 7 bis 11 **dadurch gekennzeichnet, dass** das Verbindungselement (17) auf der dem Lagerkörper (4) zugewandten Seite eine nach außen verlaufende Schräge (18) aufweist.
